# EUROPEAN PATENT APPLICATION

(11) **EP 4 742 173 A1**
(43) Date of publication of application: **13.05.2026**
(21) Application number: 25205886.2
(22) Date of filing: 30.09.2025
(51) Int. Cl.: G06V 10/147, A01B 69/00, A01B 69/04, B60R 1/31, B60R 11/04, B60W 30/09, B60W 50/14, G06T 7/593, G06V 10/10, G06V 20/58, G06V 20/64

(54) **WORK VEHICLE PERCEPTION SYSTEM**

(30) Priority: 11.11.2024 US 202463718895 P; 19.09.2025 US 202519333938
(71) Applicant: Deere & Company, Moline, IL 61265 (US)
(72) Inventor: RYAN, Alex M, Manchester (US); DEMSKI, Nathan, Menahsa (US); ELCANO, Michael A, Bakersfield (US); MAHARSHI, Atul, South Orange (US); CLINE, Benjamin Kahn, San Carlos (US); MENG, Jiayuan, Alameda (US); RAMSAY, Camden, Palo Alto (US); GOTSCH, Daniel, Pflugerville (US); ANIGSTEIN, Pablo, Palo Alto (US)
(74) Representative: Reddie & Grose LLP

(57) **Abstract**

A perception system for a work vehicle includes a sensor pod having multiple monocular imaging devices with second and third imaging devices being disposed intermediate first and fourth imaging devices. A controller receives multiple two-dimensional images from the imaging devices and develops a first three-dimensional image from first and the third two-dimensional images, a second three-dimensional image from second and the fourth two-dimensional images, and a third three-dimensional image from second and the third two-dimensional images. The controller analyzes the three-dimensional images to determine the presence of an object in a path of the work vehicle within a predetermined distance and generates an alert.

## Description

### CROSS-REFERENCE TO RELATED APPLICATION(S)

This application claims the benefit of U.S. provisional application Ser. No. 63/718,895, filed November 11, 2024, which is incorporated herein in its entirety.

### STATEMENT OF FEDERALLY SPONSORED RESEARCH OR DEVELOPMENT

Not applicable.

### FIELD OF THE DISCLOSURE

This disclosure generally relates to environmental sensing and detection for work vehicles and in particular work vehicle perception systems.

### BACKGROUND OF THE DISCLOSURE

Heavy-duty work vehicles, such as those used in the agricultural, construction, forestry, mining, and other industries, may be configured to traverse an environment operate while detecting and optionally avoiding objects in such environment. A work vehicle may be outfitted with a work vehicle perception system that may include one or more devices configured to generate images of the environment surrounding the work vehicle, the images may be analyzed and utilized to support, for example, operation of the work vehicle including navigation, object detection, or environment mapping functions.

### SUMMARY OF THE DISCLOSURE

The present disclosure provides a perception system for a work vehicle includes a sensor pod disposed on the work vehicle. The sensor pod has first, second, third, and fourth monocular imaging devices spaced apart along an axis of the sensor pod. The first, second, third, and fourth monocular imaging devices have first, second, third, and fourth optical axes, the second and third imaging devices are disposed intermediate the first and fourth imaging devices, and the first, second, third, and fourth optical axes are directed away from the work vehicle. A controller has a processing and memory architecture configured to execute instructions to receive first, second, third, and fourth two-dimensional images from the first, second, third, and fourth imaging devices, respectively. The controller is further configured to develop a first three-dimensional image from the first and the third two-dimensional images, a second three-dimensional image from the second and the fourth two-dimensional images, and a third three-dimensional image from the second and the third two-dimensional images, and analyze the first, second, and third three-dimensional images to determine presence of an object in a path of the work vehicle and within at least a predetermined distance from the work vehicle. In addition, the controller is configured to generate an alert associated with the presence of the object.

The present disclosure also provides a work vehicle that includes first, second, third, and fourth imaging devices disposed spaced apart along a side of the work vehicle. The first, second, third, and fourth imaging devices have first, second, third, and fourth optical axes, the second and third imaging devices are disposed intermediate the first and fourth imaging devices, and the first, second, third, and fourth optical axes are directed away from the side of the work vehicle. The work vehicle also includes a work vehicle perception system controller having a processing and memory architecture configured to execute instructions stored in the memory to receive first, second, third, and fourth two-dimensional images from the first, second, third, and fourth imaging devices, respectively, and develop a first three-dimensional image from the first and the third two-dimensional images, a second three-dimensional image from the second and the fourth two-dimensional images, and a third three-dimensional image from the second and the third two-dimensional images. The work vehicle perception system controller is further configured to analyze the first, second, and third three-dimensional images to determine presence of an object between the side of the work vehicle and less than a predetermined distance from the work vehicle and generate an alert associated with the presence of the object.

In some aspects, the first and third imaging devices form a first stereo pair having a first baseline and the second and fourth imaging devices form a second stereo pair having a second baseline, and a portion of the first baseline overlaps a portion of the second baseline.

In some aspects, none of the first, second, third, and fourth optical axes are parallel.

In some aspects, wherein the first imaging device is disposed proximate a first side of the sensor pod and/or the work vehicle, the first optical axis and the third optical axis are directed to a second side of the sensor pod and/or work vehicle opposite the first side. In some cases, the first optical axis forms a shallower acute angle relative to an axis of the sensor pod than the second optical axis.

In some aspects, the first and the third imaging devices are separated by a predetermined distance and the second and the fourth imaging devices are separated by the predetermined distance. In some cases, the predetermined distance is between 450 millimeters and 550 millimeters.

In some aspects, the sensor pod comprises a first sensor pod, further comprising second, third, and fourth sensor pods each having four imaging devices, and the controller develops three three-dimensional images from the imaging devices of each sensor pod. In some cases, the first, second, third, and fourth sensor pods are disposed on a front, rear, left-side, and right-side of the work vehicle, respectively. In some cases, adjacent fields of views of three-dimensional images developed from the imaging devices of the first, second, third, and fourth sensor pods have overlapping regions. In further cases, the first, second, third, and fourth sensor pods are disposed on a roof of the work vehicle.

In some aspects, the controller is configured to determine the object is associated with a human and in response causes termination of operation of the work vehicle.

### BRIEF DESCRIPTION OF THE DRAWINGS

FIG. 1 is an example work vehicle in the form of an agricultural tractor having a work vehicle perception system of the present disclosure;
FIG. 1A is a top plan view of the example work vehicle of FIG. 1;
FIG. 2 is a block diagram of the components of the work vehicle of FIG. 1;
FIG. 3 is a top plan view of a front sensor pod of the work vehicle perception system of FIG. 1;
FIG. 3A is a top plan view of rear, right-side, and left-side sensor pods of the work vehicle perception system of FIG. 1;
FIGS. 3B-3E are isometric views of the front, rear, right-side, and left-side sensor pods, respectively, of the work vehicle perception system of FIG. 1;
FIG. 3F is a schematic of the work vehicle perception system of FIG. 1;
FIG. 3G is a schematic of a sensor pod of the vehicle perception system of FIG. 1;
FIG. 3H is a schematic of fields of view of two imaging devices of the sensor pod of the work vehicle perception system of FIG. 1;
FIG. 4 is a schematic of a combined field of view of the imaging devices of the work vehicle perception system of FIG. 1;
FIG. 5 is a flowchart of steps undertaken by a work vehicle perception system controller to monitor the environment surrounding the work vehicle of FIG. 1; and
FIG. 6 is a flowchart of steps undertaken by a work vehicle perception system controller to determine if an object is in the path of the work vehicle of FIG. 1.

Like reference symbols in the various drawings indicate like elements.

### DETAILED DESCRIPTION

The following describes one or more example embodiments of the disclosed work vehicle perception system as shown in the accompanying figures of the drawings described briefly above. Various modifications to the example embodiments may be contemplated by one of skill in the art. Discussion herein focuses on the perception system being for a work vehicle, such as an agricultural tractor, but the perception system disclosed herein may be utilized in other contexts, including other work vehicle platforms in the agriculture, construction, forestry, mining, and other industries.

### OVERVIEW

In agricultural environments, a work vehicle may be operated manually, autonomously, or semi-autonomously to prepare (e.g., by tilling or digging) a field for sowing plant seeds, sow seeds in the field, irrigate or spray crops grown in the field, and the like. The work vehicle may traverse the field, for example, one row at a time, to undertake such functions. While the vehicle is being operated, a perception system of the work vehicle periodically acquires stereoscopic images of the front, rear, right-side, and left-side of the work vehicle. The work vehicle perception system processes and analyzes the acquired images to determine if an object is present along the path the work vehicle is moving, determines if the object is such that the movement of the work vehicle should cease, e.g., if the object is a human or animal, and if so, transmits a signal or message to a vehicle control system of the work vehicle regarding presence of the object.

A stereoscopic camera system includes first and second cameras disposed in fixed calibrated positions relative to one another to obtain first and second two-dimensional images having overlapping fields-of-view. As should be apparent to one who has ordinary skill in the art, each of the first and second two dimensional images comprises a two-dimensional array of pixels, each pixel is represented by an intensity value, and each intensity value is a single value if the image is a grayscale image or a tuple of three elements (an RGB intensity value) that represents, for example, the intensities of red, green, and blue components of the pixel if the image is a color image. The overlapping fields of view of the first and second cameras represented in the first and second two-dimensional (2D) images, respectively, may be analyzed to develop a three-dimensional (3D) image that includes for each pixel an intensity value (either grayscale or RGB) and a depth value associated with each pixel represented in such overlapping fields of view.

Environment imaging system may acquire images of an environment comprising a plurality of pixels and developing depth information from such images that indicates a distance between a feature associated with each pixel and a reference point common to all pixels. Typical stereoscopic cameras used in such imaging systems include two imaging devices fixedly secured to a bar such that optical planes of the imaging devices are parallel and thus optical axes (i.e., a normal to a center of each optical plane) of the optical planes are also parallel. Further, the optical planes of the two imaging devices may be coplanar in some stereoscopic cameras.

As discussed in greater detail below, the work vehicle perception system (WVPS) disclosed herein includes a sensor pod on each of the front, rear, left-side, and right-side of a work vehicle to develop a plurality of 3D images that represent a 360° field of view surrounding the work vehicle. Each sensor pod comprises first, second, third, and fourth imaging devices arranged in order proximate one side of the sensor pod to another side of the sensor pod. The first and third imaging devices form a first stereoscopic pair, the second and fourth imaging devices form a second stereoscopic pair, and the second and third imaging devices intermediate the first and fourth imaging devices form a third stereoscopic pair. That is, first, second, and third 3D images are developed from 2D images acquired by the first, second, and third stereoscopic pairs, respectively.

In some embodiments, the first, second, third, and fourth imaging devices are disposed such that the first and third imaging devices are spaced apart by a predetermined distance and the second and fourth imaging devices are spaced apart by the same predetermined distance. The separation between the first, second, third, and fourth imaging devices may be different in other embodiments in accordance with the field of view of each imaging device, the resolution of each imaging device, and the like. Further, the first, second, third, and fourth imaging devices are disposed in "double-back" configuration so that at least a portion a base line of the first stereo pair overlaps a portion of a base line of the second stereo pair. The double-back configuration reduces the number of monocular cameras and the space required to house such cameras necessary to produce three 3D images. Specifically, arranging the first, second, third, and fourth imaging devices in this manner reduces the space requirements of the sensor pod of the present disclosure compared to having three separate typical stereographic cameras described above.

Further, the optical planes (and thus the optical axes) of the first, second, third, and fourth imaging devices of the sensor pod of the present disclosure are not parallel. In particular, the first and third imaging devices of the first stereo pair are disposed in the sensor pod in a "cross-eyed" arrangement in which the optical axes of the first and third imaging devices are both directed to a first common side of the sensor pod to form first and second acute angles, respectively, relative to an axis of the sensor pod and the first acute angle is shallower than the second acute angle. The second and fourth imaging devices of the second stereo pair are also disposed in the "cross-eyed" arrangement except the optical axes of such imaging devices are directed toward a second common side of the sensor pod opposite the first common side. Thus, an object outside of the work vehicle that is occluded in a field of view of one imaging device of a stereoscopic pair may be visible in a field of view of the other imaging device of the stereoscopic pair.

Each of the front, rear, left-side, and right-side sensor pods generates three 3D images and thus the WVPS generates twelve 3D images having a combined fields of view that spans 360° about the work vehicle.

A WVPS controller obtains a set of 3D images that span 360° about the work vehicle when the work vehicle is being operated either manually, autonomously, or semi-autonomously, analyzes the set of 3D images to identify any objects that are in the path of the work vehicle, determines if the object is within at least a predetermined distance from the work vehicle, determines if the object may be of a type (e.g., human, animal, an obstacle and the like) with which the work vehicle should avoid colliding for safety purposes. The predetermined distance is a sum of an estimated stopping distance of the work vehicle and a predetermined threshold. In some embodiments, if the object is not human, the WVPS alerts a vehicle control system that the object has been detected. The vehicle control system may notify an operator that the object is present and allow the operator to determine if the work vehicle should be stopped. In cases where the object is determined to likely be a human, the WVPS system may alert the vehicle control system that a human has been detected and the vehicle control system may terminate motion of the vehicle until the operator verifies the human is no longer present in the path and restarts motion of the vehicle.

### EXAMPLE WORK VEHICLE PERCEPTION SYSTEM

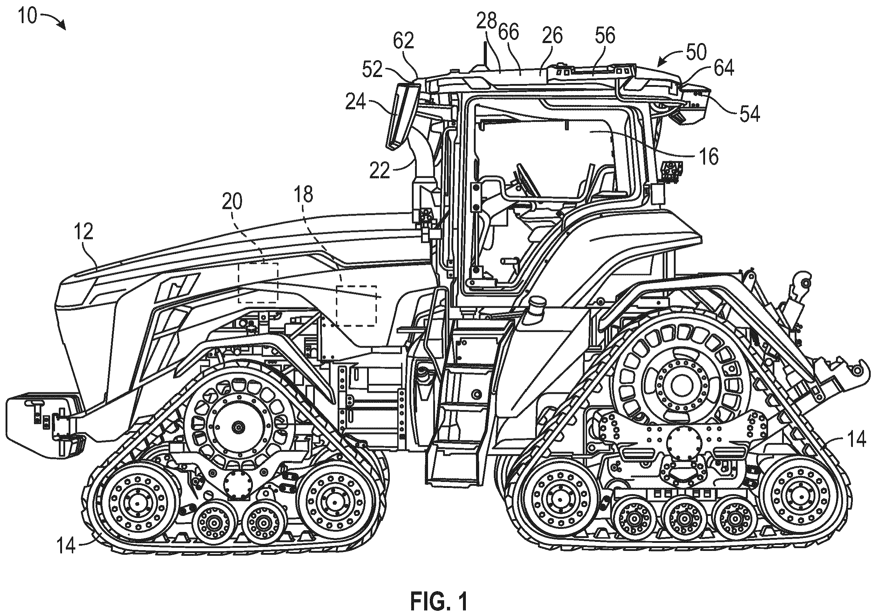

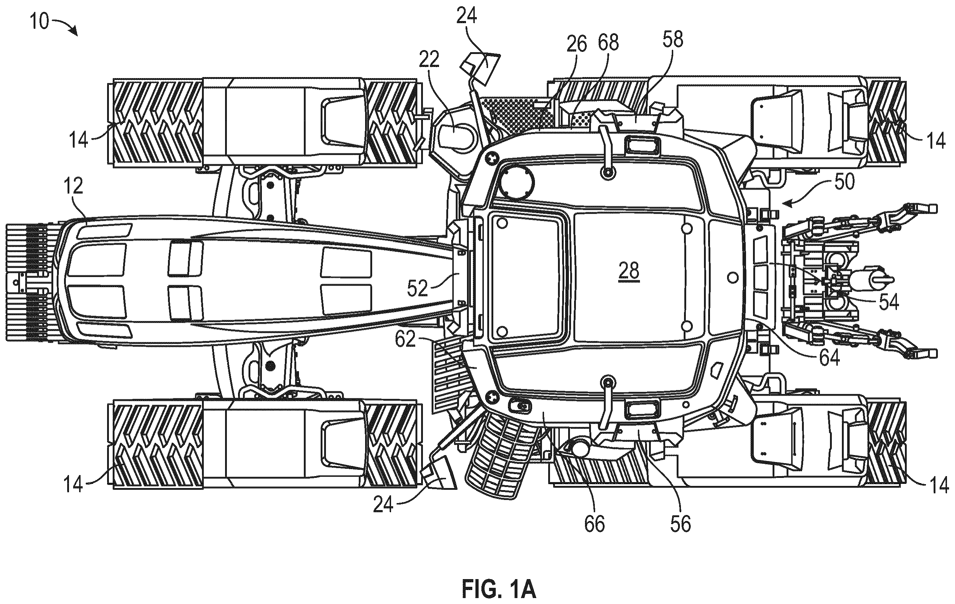

Referring to FIGS. 1 and 1A, a work vehicle 10 is shown that can implement embodiments of the disclosure. In the illustrated example, the work vehicle 10 is depicted as an agricultural tractor. It will be understood, however, that other configurations may be possible, including configurations with the work vehicle 10 as a different kind of tractor, a harvester, a log skidder, a grader, or one of various other work vehicle platforms. The work vehicle 10 includes a chassis or frame 12 carried on one or more ground engaging members 14 such as wheels, tracks, and the like. The work vehicle 10 includes a cabin 16 that may be occupied by an operator when the work vehicle 10 is being used thereby. The work vehicle includes a powertrain 18 and a vehicle control system 20, one or more exhaust stack(s) 22, and one or more mirrors 24. The powertrain 18 comprises, for example, an engine system, a transmission, a drive line, and the like. Disposed on an outer periphery 26 of a roof 28 of the cabin is a work vehicle perception system 50 (WVPS). The vehicle control system 20 controls operation of powertrain 18 in response to directives received from the operator. Further, in some embodiments, the vehicle control system 20 may autonomously drive the work vehicle over a field in accordance with a path selected by the operator. As discussed in greater detail below, the WVPS 50 monitors the environment surrounding the work vehicle 10 for any objects that may interfere with operation of the work vehicle 10 at least while the work vehicle is being driven manually by the operator and/or autonomously by the vehicle control system 20. The WVPS 50 transmits a signal or a message to the vehicle control system 20 if such an object is identified by the WVPS 50.

The WVPS 50 includes front, rear, left-side, and right-side sensor pods 52, 54, 56, and 58 disposed on a front, rear, left-side, and right-side portions 62, 64, 66, and 69, respectively, of the outer periphery 26. The sensor pods 52, 54, 56, 58 are disposed such that imaging devices (described below) of the sensor pods face outward away from the portions 62, 64, 66, 68, respectively, of the outer periphery 22. In some embodiments, the rear sensor pod 64 includes a vented housing in which a WVPS controller 72 is disposed. In other embodiments, the WVPS controller 72 may be disposed in another part of the work vehicle 10 or even integrated with the vehicle control system 20.

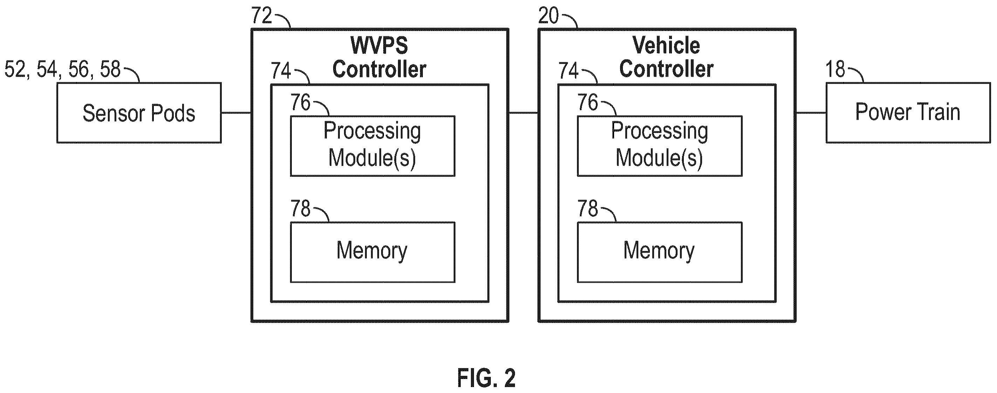

Referring also to FIGS. 2 and 2A, the WVPS controller 72 controls the imaging devices in the sensor pods 52, 54, 56, and 58 to acquire images and receives acquired images therefrom. The WVPS controller 72 also communicates with the vehicle control system 20 as described herein regarding any objects identified thereby so that the vehicle control system 20 can adjust operation of the powertrain 18 accordingly. The vehicle control system 20 and the WVPS controller 72 may be implemented using hardware, software, firmware, or combinations thereof. In the illustrated embodiment, such components 20 and 72 may be implemented by one or more suitably programmed computer-based device(s) 74, some or each having one or more processing module(s) 76 and a memory 78. The memory 78 has stored therein, among other things, programming instructions executed by one or more processing module(s) 76 to cause the vehicle system controller 20 and the WVPS controller 72 to undertake functions of the work vehicle 10 described herein.

Each computer-based device 74 may comprise, e.g., computer, a device using one or more application specific integrated circuits (ASIC's) and/or field-programmable gate arrays (FPGA's), and/or combinations thereof. Such device 74 may be unitary or may be distributed multiple computing devices, and one or more such computing devices may be installed locally on or remote from the work vehicle 10. Each computing device 74 may communicate with another computing device over one or more network(s) such as a local area network (LAN), a control area network (CAN), a cellular network, a wide area network (WAN) such as the Internet, and the like. One or both of the vehicle control system 20 and the WVPS controller 72 may be responsive to one or more user device(s) (not shown) such as a keyboard, a mouse, a display, a touchscreen, a joystick, etc. (not shown) via which the operator may monitor and direct operation of the work vehicle 10.

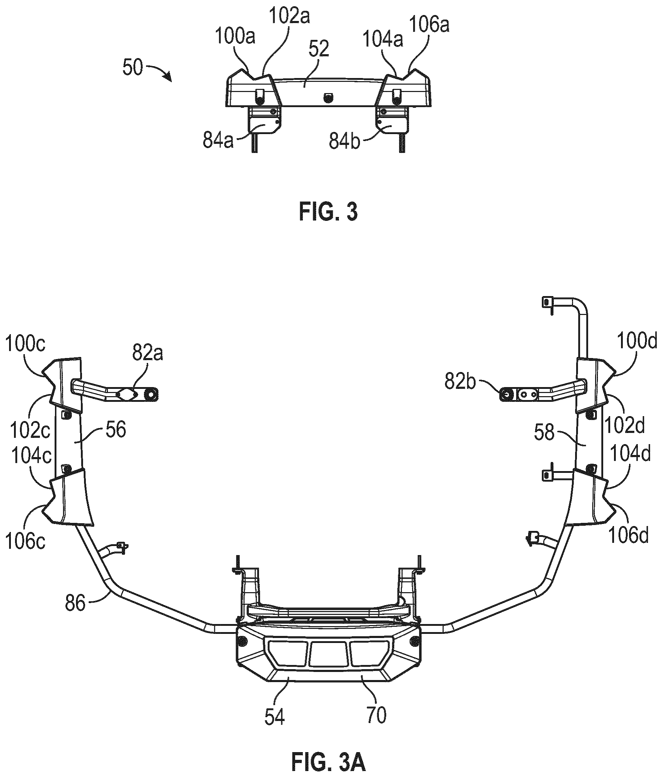

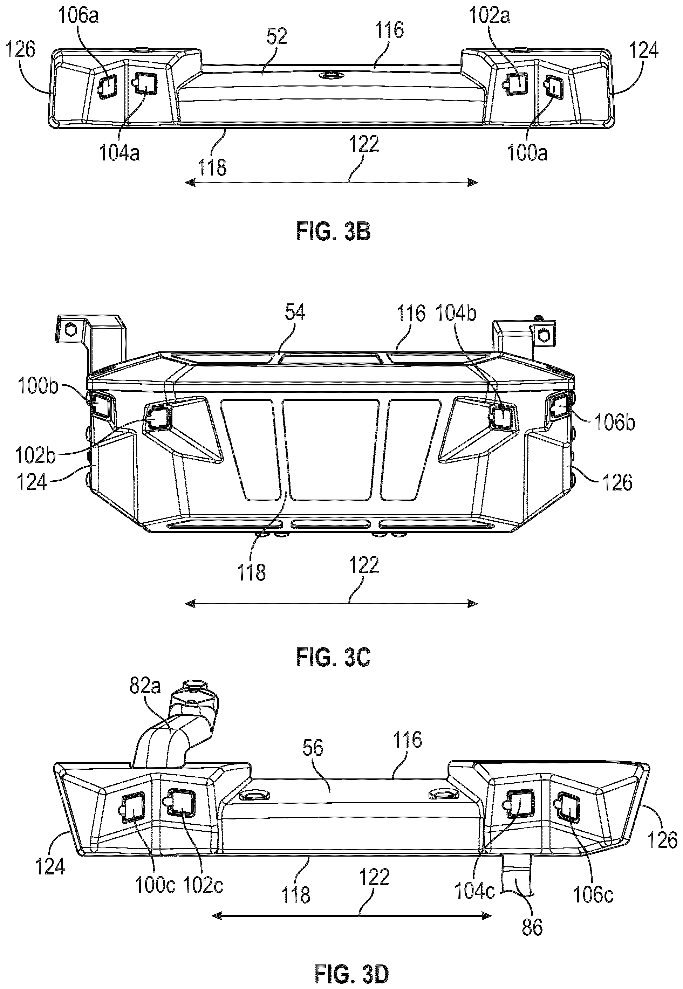

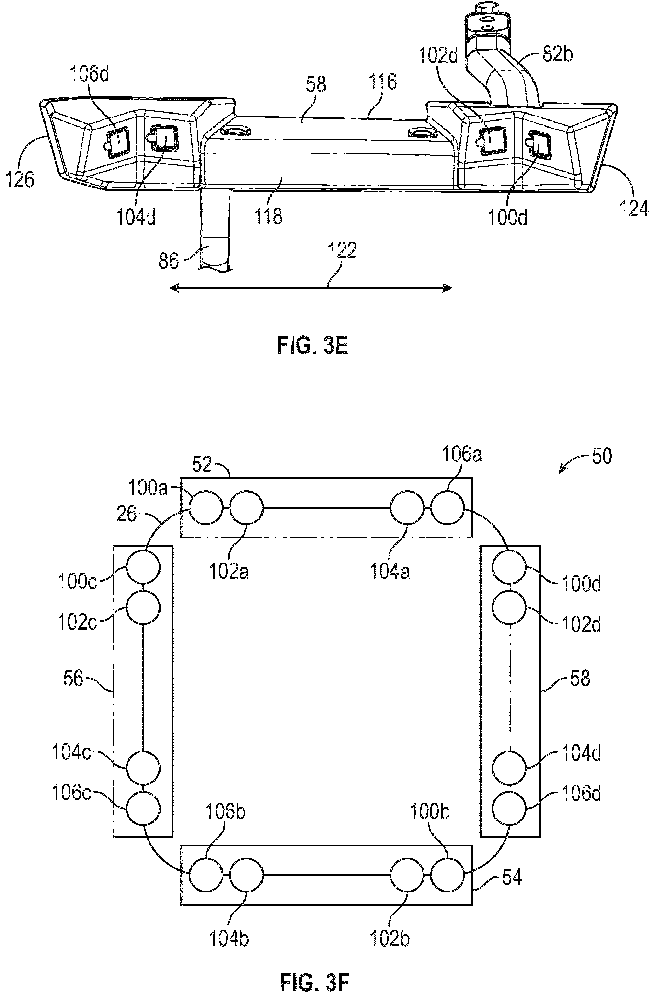

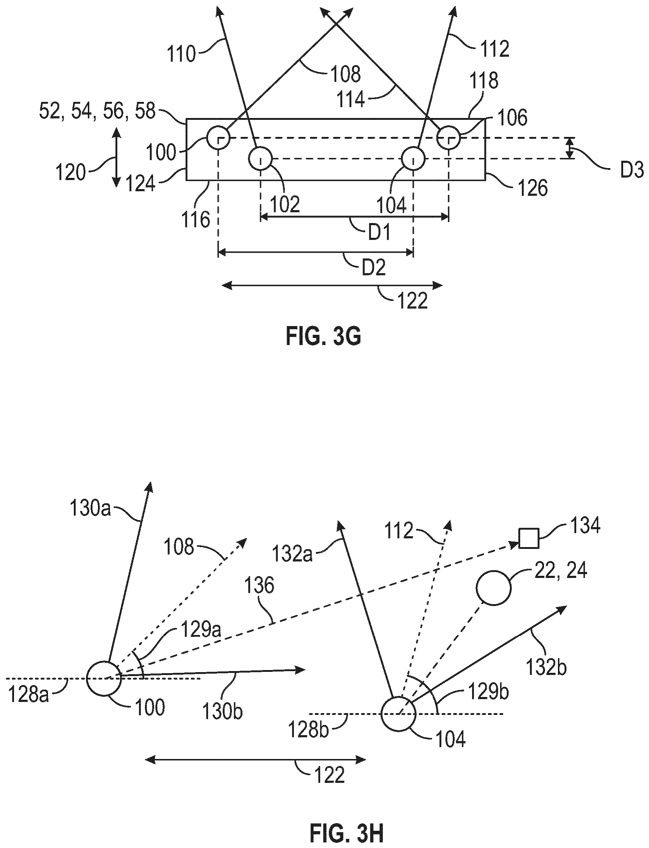

Referring also to FIGS. 3 and 3A-3H, the front, rear, left-side, and right-side sensor pods 52, 54, 56, and 58 are electronically coupled to the WVPS controller 72. In some embodiments the, one or more of the sensor pods 52, 54, 56, and 58 may include one or more mounting member(s) 82, 84 that may be used to secure such sensor pod to work vehicle 10. In some embodiments, one or more sensor pods 52, 54, 56, and 58 may be secured to a frame 86, which in turn is secured to the roof 28 of the work vehicle 10. In some embodiments, the frame 86 may also serve as a conduit for wiring that electronically couples the one or more sensor pods 52, 54, 56, 58 coupled to the WVPS controller 72 for communication therebetween. In some cases, one or more sensor pods 52, 54, 56, 58 may include one or more wireless communication devices (not shown) that facilitate exchange of data between such one or more sensor pods 52, 54, 56, 58 and the WVPS controller 72.

Each of the front, rear, left-side, and right-side sensor pods 52, 54, 56, and 58 includes first, second, third, and fourth monocular (or monoscopic) imaging devices 100, 102, 104, and 106 that each produce a 2D image. The first, second, third, and fourth imaging devices 100, 102, 104, 106 are disposed so the first, second, third, and fourth optical axes 108, 110, 112, 114 of the first, second, third, and fourth imaging devices 100, 102, 104, 106, respectively, extends outward away from the outer periphery 26 of the roof 28 of the work vehicle 10.

Each sensor pod 52, 54, 56, 58 includes a vehicle side 116 that is proximate the work vehicle 10 when disposed thereon. The sensor pod 52, 54, 56, and 58 includes an environment side 118 that is opposite the vehicle side 116 and is separated from the vehicle side 116 along an axis 120. Further each sensor pod 52, 54, 56, 58 extends along an axis 122 from a left-side 124 to a right-side 126 thereof.

The first, second, third, and fourth imaging devices 100, 102, 104, 106 are disposed in order between the left side 124 and the right side of the sensor pod 52, 54, 56, 58. The first imaging device 100 and the third imaging device 104 form a stereo pair 100/104, the second imaging device 102 and the fourth imaging device 106 form a stereo pair 102/106, and the second imaging device 102 and the third imaging device 104 form a third stereo pair 102/104. Four 2D images acquired using the monocular imaging devices 100, 102, 104, and 106 are processed by the WVPS controller 72 to generate first, second, and third 3D images associated with the first, second, and third stereo pairs 100/104, 102/106, and 102/104, respectively. Further, the imaging devices 100, 102, 104, 106 are interleaved in a so-called "double-back" configuration in which the baselines of the first, second, and third stereo pairs 100/104, 102/106, 102/104 at least partially overlap. That is, the left side imaging devices 100,102 of the first and second stereo pairs 100/104,102/106 adjacent one another and right-side imaging devices 104,106 of such stereo pairs are adjacent one another. One of skill in the art would understand that to produce three 3D images using the typical stereoscopic cameras described above in which each stereoscopic camera comprises two cameras fixedly secured to a bar would require three such stereoscopic cameras (i.e., six monocular cameras). Further, disposing such stereoscopic cameras end-to-end in a line would require significantly more space than arranging the four imaging devices 100,102,104,106 in the double-back configuration.

In some embodiments the first imaging device 100 and the third imaging device 104 are separated along the axis 122 by a first distance D1, and the second imaging device 102 and the fourth imaging device 106 are separated along the axis 122 by a second distance D2. In some embodiments, the first distance D1 and the second distance D2 are identical. The imaging devices 102 and 104 are also separated from one another along the axis 122 by a predetermined distance. Further, in some embodiments, the centers of the imaging planes of the first, second, third, and fourth imaging devices 100, 102, 104, and 106 are all collinear along a line parallel to the axis 122. In other embodiments, centers of the imaging planes of the first imaging device 100 and the fourth imaging device 106 are colinear, centers of the imaging planes of the second imaging device 102 and third imaging device 104 are colinear, and the centers of the imaging planes of the first and fourth imaging devices 100, 106 and of the second and third imaging devices 102, 104 are separated along the axis 120 by a distance D3. Separating the first and fourth imaging devices 100, 106 from the second and third imaging devices 102, 104 prevents occlusion of the fields of view of the first and fourth imaging devices 100, 106 by the second and third imaging devices 102, 104 or other parts of the sensor pod 52, 54, 56, 58. The distance D3 may be selected in accordance with the dimensions and orientations of the first, second, third, and fourth imaging devices 100, 102, 104, 106, the spans of the fields of view thereof, and the dimensions of sensor pod 52, 54, 56, 58. In some embodiments, the second and third imaging devices 102,104 may also be separated from one another along the axis 120 to prevent one of these imaging device occluding the field of view of the other imaging device. In some embodiments, the distances D1 and D2 are both between approximately 450 millimeters and approximately 550 millimeters. In some embodiments, the distances D1 and D2 are both approximately 500 millimeters. It should be apparent to one who has ordinary skill in the art that the distance (i.e., distances D1 and D2) between imaging devices that comprise a stereo pair may affect a range of distance that may be represented in a 3D image generated from such stereo pair and the accuracy of any distance measures in such 3D image.

During operation, the WVPS controller 72 receives 2D images captured by each imaging device 100, 102, 104, 106 of each sensor pod 52, 54, 56, and 58. The WVPS controller 72 generates a first 3D image from the 2D images acquired by the first imaging device 100 and third imaging device 104, a second 3D image from the 2D images acquired by the second imaging device 102 and fourth imaging device 106, and a third 3D image from the 2D images acquired from the second imaging device 102 and the third imaging device 104. The WVPS controller 72 generates three 3D images from four 2D images captured by the imaging devices 100, 102, 104, 106 of each sensor pod 52, 54, 56, 58. Thus, the WVPS controller 72 generates 12 3D images from 16 2D images captured by the imaging devices 100, 102, 104, 106 of each of the four sensor pods 52, 54, 56, 58. The WVPS controller 72 uses techniques known to one having ordinary skill in the art including depth map generation, triangulation, and the like to create first, second, and third 3D image from pairs of 2D images acquired by the stereo pairs 100/104, 102/106, and 102/104 of the sensor pods 52, 54, 56, 58.

In some embodiments, the optical axes 108, 110, 112, 114 of the imaging devices 100, 102, 104, 106 are not parallel. Overlap regions of fields of view of two imaging devices with non-parallel optical axes may be larger than those of two imaging devices that have parallel optical axes. In some embodiments, the imaging devices 100, 102, 104, and 106 are disposed in the sensor pods 52, 54, 56, 58 such that the optical axes 108/112 of the stereo pair 100/104 and the optical axes of the stereo pair 102/106 intersect at a point beyond the work vehicle 10. Further, the optical axes 108/112 of the stereo pair 100/104 and the optical axes 110/114 of the stereo pair 102/106 may be arranged in a "cross-eyed" configuration so that an object that is occluded by an element of the work vehicle in the field of view of one imaging device (e.g., imaging device 106) of the stereo pair (e.g., stereo pair 102/106) is not occluded (i.e., is visible) in the field of view of the other imaging device (e.g., imaging device 102) of such stereo pair, as described in greater detail below. Such cross-eyed configuration may also increase the overlap of the fields of view of such stereo pairs. Specifically, in the cross-eyed configuration, the imaging devices 100,104 of the stereo pair 100/104 are disposed such that the optical axis 108 of first imaging device 100 proximate the side 124 and the optical axis 108 of the third imaging device 104 are both directed toward the opposite side 126. Further, the optical axes 108, 112 of the stereo pair 100/104 form acute angles 129a,129b relative to lines 128a,128b that are parallel to the axis 122 and that pass through centers of the fields of view of the imaging devices 100,104, respectively. In the cross-eyed configuration, the angle 129a is smaller than the angle 129b (i.e., the optical axis 108 of the imaging device proximate the side 124 forms a shallower acute angle than the optical axis 112 of the imaging device 104 away from the side 124 relative to the axis 122).

Similarly, the optical axis 114 of the fourth imaging device 106 proximate the side 126 and the optical axis 110 of the second imaging device 102 are both directed toward the side 124 opposite the side 126 and are disposed in the cross-eyed configuration such that the optical axis 114 forms a shallower acute angle than the optical axis 110 relative to the axis 122.

As discussed above, the optical axis 108/112, 110/114, and 110/112 of stereo pairs 100/104, 102/106, 102/104, respectively, are not parallel and are disposed in the cross-eyed configuration, the 2D images captured by each such stereo pair have substantial overlapping fields of view proximate the work vehicle and an object occluded in a first 2D image captured by one imaging device of the stereo pair may be visible in a 2D image captured by the other imaging device of the stereo pair. To illustrate this, FIG. 3B shows the imaging devices 100 and 104 that comprise the stereo pair 100/104 having non-parallel optical axes 108 and 112, respectively. The field of view of the imaging device 100 is bounded by rays 130a and 130b and the field of view of the imaging device 104 is bounded by rays 132a and 132b. A component of the work vehicle 10, for example, the exhaust stack 22 or mirrors 24 (FIG. 1) may occlude an object 134 from being visible in a 2D image captured by the imaging device 104. However, the object 134 would be visible in a 2D image captured by the imaging device 100 as shown by the ray 136. Further, the fields of view of imaging devices 100, 102, 104, 106 also overlap those of adjacent cameras do not form a stereo pair with such imaging devices. For example, the fields of view of imaging devices 100,102 have portions that overlap and the fields of view of imaging devices 104,106 also have portions that overlap. Further, adjacent imaging devices 100 and 106 of adjacent sensor pods 52,54,56,58 may also have fields of view that overlap. Such overlap portions of adjacent imaging devices 100,102,104,106 that do not form a stereo pair and those of imaging devices that do form a stereo pair ensures that an object occluded in the field of view of a particular imaging device 100,102,104,106 may be visible in the field of view of an adjacent imaging device, wherein the particular imaging device and the adjacent imaging device may be in the same sensor pod 52,54,56,58 or in different sensors pods.

In some embodiments, each of the first, second, third and fourth imaging devices 100, 102, 104, 106 has a 2.4 megapixel color sensor and a field of view that spans 75°. Color sensors with more or fewer pixels and with a larger or smaller field of view may be used in other embodiments.

In some embodiments, two or more of the imaging device 100b, 102b, 104b, 104c of the rear sensor pod 54 may have parallel optical axes because the rear of the work vehicle 10 may be free of any components (e.g., the exhaust stack 22, mirrors 24, etc.) that may occlude the fields of view of such cameras. For example, the optical axes of the imaging devices 100b and 104b may be parallel and/or the optical axes of the imaging devices 102b and 106b may be parallel.

Having overlapping fields of view also facilitates calibration of the imaging device 100, 102, 104, 106 because objects commonly represented in such overlapped regions may be identified in 2D images from imaging devices that form stereo pairs and align such imaging devices to one another.

In some embodiments, one or more of the imaging devices 100, 102, 104, 106 may be disposed in the sensor pod 52, 54, 56, 58 in an identical lateral plane or different lateral planes (i.e., at different vertical distances from a horizontal plane of the work vehicle 10). In addition, the imaging devices 100, 102, 104, 106 may have identical pitch so that the optical axis 108, 110, 112, 114, respectively, form a common uniform angle with respect to the horizontal plane of the work vehicle. Alternately, the imaging devices 100, 102, 104, 106 may be disposed so that the optical axes 108, 110, 112, 114, respectively, have different angles with respect to such horizontal plane. In some embodiments, one or more of the imaging devices 100, 102, 104, 106 have a pitch so that one or more optical axes 108, 110, 112, 114, respectively, is/are directed in a direction parallel to such horizontal plane. In still embodiments, one or more of the imaging devices 100, 102, 104, 106 have a pitch so that one or more optical axes 108, 110, 112, 114, respectively, is/are directed toward the ground. It should be apparent to one who has ordinary skill in the art that the WVPS controller 72 may rectify or otherwise adjust images acquired by the imaging devices 100, 102, 104, 106 to compensate for such differences in orientations of the optical axes 108, 110, 112, 114.

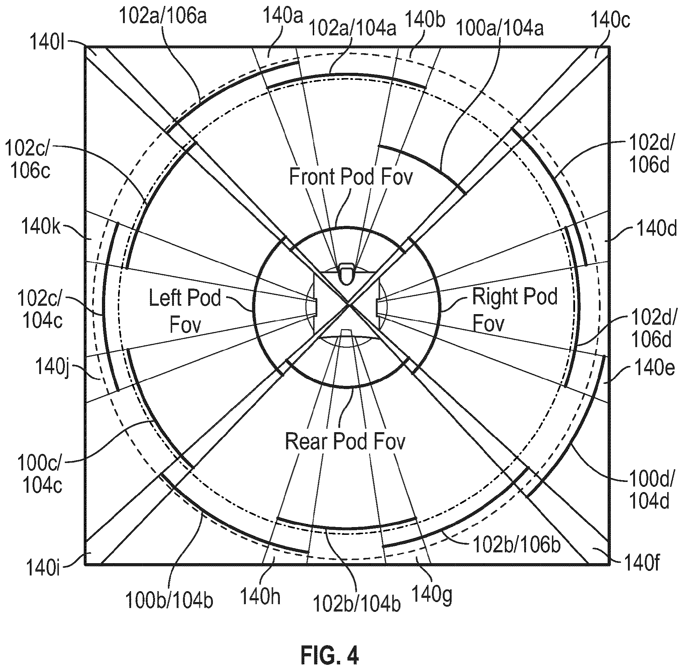

FIG. 4 illustrates the fields of view of 3D images generated from the stereo pairs 100/104, 102/106, and 102/104 of each of the front, rear, left-side, and right-side sensor pods 52, 54, 56, and 58. Adjacent fields of view of 3D images from stereo pairs 102/106, 102/104, and 100/104 of the sensor pods 52, 54, 56, and 58 include regions 140 that overlap. For example, as shown in FIG. 4, a field of view of 3D image generated using the stereo pair 102a/106a of the front sensor pod 52 includes a region 140a that is also in an adjacent field of view of the 3D image generated from the stereo pair 102a/104a of the front sensor pod 52. Further, the 3D field of view of stereo pair 102a/106a also includes a region 140l that is also in an adjacent 3D field of view of stereo pair 102c/106c of the left-side sensor pod 56.

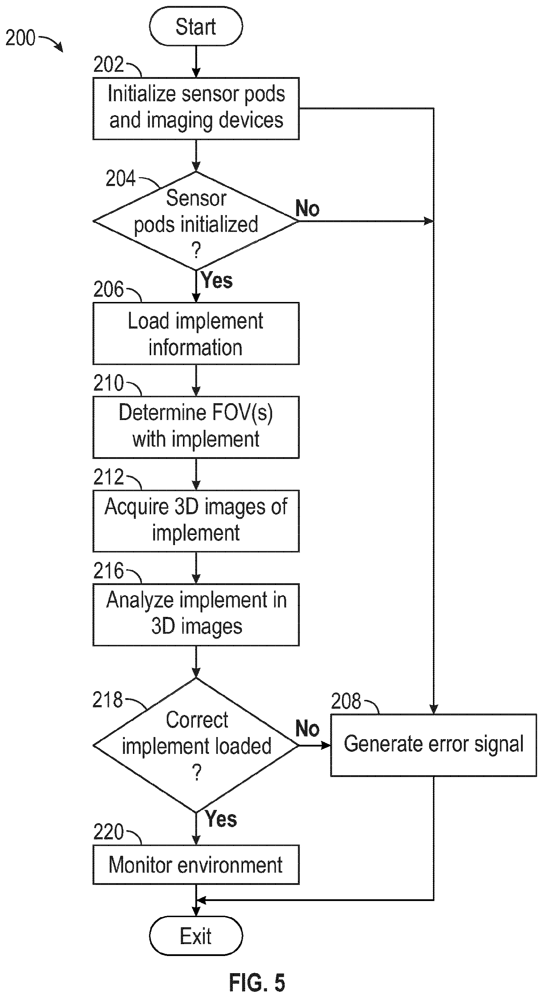

FIG. 5 is a flowchart 200 of steps undertaken by the WVPS controller 72 during operation of the work vehicle 10. At step 202 the WVPS controller 72 initializes the imaging devices 100, 102, 104, 106 of each of the sensor pods 52, 54, 56, 58. As part of the initialization process, the WVPS controller 72 directs each imaging device 100, 102, 104, 106 to acquire at least one image of the environment surrounding the work vehicle. At step 204, the WVPS controller 72 determines if the imaging devices 100, 102, 104, 106 of all of the sensor pods 52, 54, 56, 58 have initialized and the images from all of the imaging devices 100, 102, 104, 106 have sufficient quality (e.g., are in focus, the lenses of the imaging devices 100, 102, 104, 106 are clean, etc.) and if so proceeds to step 206. Otherwise, the WVPS controller 72 transmits an error signal or message to the vehicle control system 20, at step 208, that at least one of the imaging devices 100, 102, 104, 106 is not operating correctly, and exits.

As should be apparent to one who has ordinary skill in the art, one or more implements such as row tillers, seed sowing devices, sprayers, and the like may be coupled to and transported by the work vehicle 10. At step 206, the WVPS controller 72 receives configuration information from the vehicle control system 20 (or loads such information from another source) that indicates the type of implement that is supposed to be coupled to the work vehicle 10, location (e.g., front, rear, etc.) of such implement relative to the work vehicle 10, and dimensions of the implement. At step 210, the WVPS controller 72 determines one or more fields of view of one or more stereo pairs 100/104, 102/104, and 102/106 of the sensor pods 52, 54, 56, 58 in which the implement should be visible. At step 212, the WVPS controller 72 directs the imaging devices 100, 102, 104, 106 of the sensor pods 52, 54, 56, 58 associated with such one or more fields of view to capture 2D images and generates 3D images from the captured images.

At step 214, the WVPS controller 72 analyzes one or more 3D images associated with the fields of view in which the implement should be visible to confirm that the implement is indeed represented in such 3D images and that dimensions of the implement represented in the 3D image are consistent with those of the implement that is supposed to be coupled to the work vehicle 10. Machine vision techniques including image segmentation, object analysis, decision trees, machine learning, and the like that would be apparent to one who has ordinary skill in the art may be used to determine the type and dimensions of the work vehicle represented in the 3D images.

At step 218, the WVPS controller 72 determines if the type and dimensions of the implement represented in the 3D images match the expected implement and if so proceeds to step 220. Otherwise, the WVPS controller 72 proceeds to step 208 to generate and transmit to the vehicle control system 20 an error signal or message that the correct implement is not attached to the work vehicle 10 and exits.

At step 220, the WVPS controller 72 monitors the environment surrounding the work vehicle 10 to confirm that no objects are present in the path of the work vehicle 10 or the path of the implement being pulled or pushed by the work vehicle 10 that warrant stopping the work vehicle or alerting the operator.

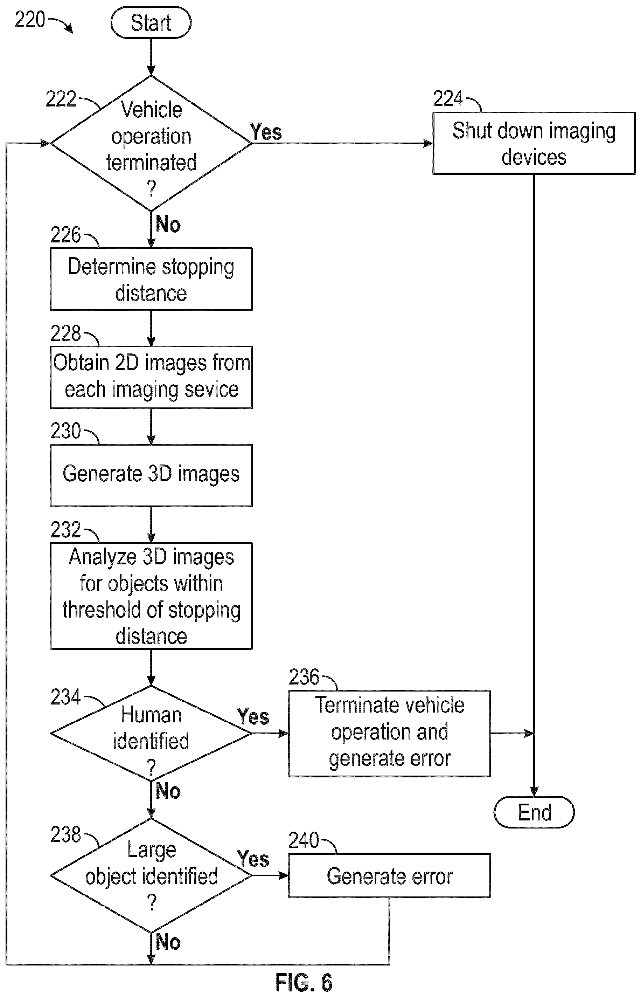

FIG. 6 is a flowchart of steps the WVPS controller 72 undertakes at step 220 of FIG. 5 to monitor the environment surrounding the work vehicle 10. At step 222 the WVPS controller 72 checks if the vehicle control system 20 has issued a signal or message that operation of the work vehicle 10 is to be terminated. If so, the WVPS controller 72 shuts down the imaging devices 100, 102, 104, 106 and exits.

At step 226 the WVPS controller 72 analyzes a speed of work vehicle 10, a slope of the ground on which the work vehicle is operating, a coefficient of friction between the ground engaging members 14 and the ground, the weight of the work vehicle 10 and any implement attached thereto, expected delay for activation of the brake, and the like to estimate a stopping distance necessary to bring the work vehicle to a stop. It should be apparent to one of ordinary skill in the art that one or more sensors (not shown) in the work vehicle 10 may provide data to the WVPS controller 72 regarding the speed of the work vehicle 10, the slope of the ground, and the coefficient of friction.

At step 228, the WVPS controller 72 directs each imaging device 100, 102, 104, 106 of the sensor pods 52, 54, 56, 58 to acquire a 2D image. At step 230 the WVPS controller 72 generates a 3D image for each sensor pair 100/104, 102/106, and 102/104. At step 232, the WVPS controller 72 analyzes each 3D image to determine if any object is represented therein that is in a path in which the work vehicle 10 and/or implement carried by the work vehicle 10 is moving and at a distance that is a predetermined threshold greater than the stopping distance determined at step 226. In some embodiments, the predetermined threshold is 1 meter. In such embodiments, if the estimated stopping distance is 50 meters, then any object at or closer than 51 meters from the work vehicle 10 or the implement in the direction of movement thereof would be identified at step 232. For example, an object may be determined to be in the path of the work vehicle 10 if the work vehicle 10 is moving forward and the object is in front of the work vehicle. However, an object may also be determined to be in the path of the implement, for example, pulled by the work vehicle 10 if the object is on a side of the work vehicle 10, the work vehicle 10 and the implement are moving forward, and the object is in the path in which the implement is moving.

At step 234, the WVPS controller 72 determines if any objects identified in the 3D images at step 232 may be a representation of a human. Machine vision techniques including image segmentation, object analysis, decision trees, machine learning, and the like that would be apparent to one who has ordinary skill in the art may be used to determine if an identified object may be a representation of a human in the 3D images. If the object is determined to possibly be a representation of a human at step 234, the WVPS controller 72, at step 236, transmits a signal and/or message to the vehicle control system 20 that a human may be in the path of the work vehicle 10 and/or implement and exits. In response, the vehicle control system 20 may terminate movement of the work vehicle 10 and alert the operator accordingly. In some embodiments, the WVPS controller 72 may, at step 236, terminate movement of the work vehicle 10 and then send the signal or message to the vehicle control system 20.

If the WVPS controller 72 determines the object is not a human at step 234, the WVPS controller 72 determines, at step 238, if the object is sufficiently large that a collision of the work vehicle 10 or the implement with such object may damage the work vehicle 10 or the implement. If such object is not identified, the WVPS controller 72 returns to step 222. If a sufficiently large object is identified at step 238, the WVPS controller 72, at step 240, generates a message to the vehicle control system 20 that a large object has been identified in the path of the work vehicle 10 and/or implement and returns to step 222. In such cases, the vehicle control system 20 alerts the operator of the large object and allows the operator to decide whether to continue or terminate operation of the work vehicle 10.

In some embodiments, the WVPS controller 72, at step 228, may confirm that imaging devices 100, 102, 104, 106 are generating images having sufficient quality. If images with sufficient quality are not being acquired, the WVPS controller 72 may alert the vehicle control system 20 that there may be a problem with one or more of the imaging devices 100, 102, 104, 106. Further, in some embodiments, the WVPS controller 72 may wait a predetermined amount of time, for example, 30 seconds, and recheck the quality of the images to determine if the problem has been resolved.

Although the embodiments of the WVPS 50 discussed above contemplate the use of four sensor pods 52, 54, 56, 58, disposed on four sides of the work vehicle 10, it should be apparent to one who has ordinary skill that the WVPS 50 comprises a modular design and may be adapted for use with fewer or more sensor pods 52, 54, 56, 58 to provide a 360° field of view around the work vehicle 10. Further, in some applications a 360° field of view around the work vehicle 10 may not be necessary and as such fewer sensor pods 52, 54, 56, 58 may be used to provide a 180° field of view, a 270° field of view, or a field of view having a different span.

Although, the sensor pods 52, 54, 56, 58 of the WVPS 50 discussed above each have four imaging devices 100,102,104,106 that may be used to generate three 3D images, it should be apparent to one having ordinary skill in the art that one or more of the sensor pods 52, 54, 56, 58 may include more or fewer imaging devices to generate more or fewer than three 3D images per sensor pod.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, unless otherwise limited or modified, lists with elements that are separated by conjunctive terms (e.g., "and") and that are also preceded by the phrase "one or more of" or "at least one of" indicate configurations or arrangements that potentially include individual elements of the list, or any combination thereof. For example, "at least one of A, B, and C" or "one or more of A, B, and C" indicates the possibilities of only A, only B, only C, or any combination of two or more of A, B, and C (e.g., A and B; B and C; A and C; or A, B, and C).

The description of the present disclosure has been presented for purposes of illustration and description, but it is not intended to be exhaustive or limited to the disclosure in the form disclosed. Many modifications and variations will be apparent to those of ordinary skill in the art without departing from the scope and spirit of the disclosure. Explicitly referenced embodiments herein were chosen and described in order to best explain the principles of the disclosure and their practical application, and to enable others of ordinary skill in the art to understand the disclosure and recognize many alternatives, modifications, and variations on the described example(s). Accordingly, various embodiments and implementations other than those explicitly described are within the scope of the following claims.

Embodiments of the present disclosure may be described with reference to the following numbered clauses, with preferred features laid out in the dependent clauses:
Clause 1. A work vehicle, comprising:
   first, second, third, and fourth imaging devices disposed spaced apart along a side of the work vehicle, wherein first, second, third, and fourth imaging devices have first, second, third, and fourth optical axes, the second and third imaging devices are disposed intermediate the first and fourth imaging devices, and the first, second, third, and fourth optical axes are directed away from the side of the work vehicle; and
   a work vehicle perception system controller having a processing and memory architecture configured to execute instructions stored in the memory to:
   receive first, second, third, and fourth two-dimensional images from the first, second, third, and fourth imaging devices, respectively;
   develop a first three-dimensional image from the first and the third two-dimensional images, a second three-dimensional image from the second and the fourth two-dimensional images, and a third three-dimensional image from the second and the third two-dimensional images;
   analyze the first, second, and third three-dimensional images to determine presence of an object between the side of the work vehicle and less than a predetermined distance from the work vehicle; and
   generate an alert associated with the presence of the object.
Clause 2. The work vehicle of clause 1, wherein the first and third imaging devices form a first stereo pair having a first baseline and the second and fourth imaging devices form a second stereo pair having a second baseline, and a portion of the first baseline overlaps a portion of the second baseline.
Clause 3. The work vehicle of clause 1 or 2, wherein none of the first, second, third, and fourth optical axes are parallel.
Clause 4. The work vehicle of clause 3, wherein the first imaging device is disposed proximate a first side of the work vehicle, the first optical axis and the third optical axis are directed to a second side of the work vehicle opposite the first side.
Clause 5. The work vehicle of clause 3 or 4, wherein the first imaging device and the second imaging device are disposed in a sensor pod having third and fourth sides proximate the first and second sides, respectively, the third and fourth sides are separated along an axis, and the first optical axis forms a shallower acute angle relative to the axis than the second optical axis.
Clause 18. The work vehicle of any preceding clause, wherein the first and the third imaging devices are separated along the axis by a predetermined distance and the second and the fourth imaging devices are separated along the axis by the predetermined distance, and the predetermined distance is between 450 millimeters and 550 millimeters.
Clause 19. The work vehicle of any preceding clause, wherein the first, second, third, and fourth imaging devices comprise a first sensor pod, the work vehicle further comprising second, third, and fourth sensor pods each having four imaging devices, wherein the controller develops three three-dimensional images from the imaging devices of each sensor pod, and the first, second, third, and fourth sensor pods are disposed on a roof of the work vehicle and on a front, rear, left-side, and right-side of the work vehicle, respectively.
Clause 20. The work vehicle of any preceding clause, wherein adjacent fields of views of three-dimensional images generated from the imaging devices of the first, second, third, and fourth sensor pods have overlapping regions and the work vehicle perception system controller is configured to determine the object is associated with a human and in response causes termination of operation of the work vehicle.

## Claims

1. A perception system for a work vehicle, comprising:
a sensor pod disposed on the work vehicle, the sensor pod having first, second, third, and fourth monocular imaging devices spaced apart along an axis of the sensor pod, wherein first, second, third, and fourth monocular imaging devices have first, second, third, and fourth optical axes, the second and third imaging devices are disposed intermediate the first and fourth imaging devices, and the first, second, third, and fourth optical axes are directed away from the work vehicle; and
a controller having a processing and memory architecture configured to execute instructions to:
receive first, second, third, and fourth two-dimensional images from the first, second, third, and fourth imaging devices, respectively;
develop a first three-dimensional image from the first and the third two-dimensional images, a second three-dimensional image from the second and the fourth two-dimensional images, and a third three-dimensional image from the second and the third two-dimensional images;
analyze the first, second, and third three-dimensional images to determine presence of an object in a path of the work vehicle and within at least a predetermined distance from the work vehicle; and
generate an alert associated with the presence of the object.

2. The perception system of claim 1, wherein the first and third imaging devices form a first stereo pair having a first baseline and the second and fourth imaging devices form a second stereo pair having a second baseline, and a portion of the first baseline overlaps a portion of the second baseline.

3. The perception system of claim 1 or 2, wherein none of the first, second, third, and fourth optical axes are parallel.

4. The perception system of claim 3, wherein the first imaging device is disposed proximate a first side of the sensor pod, the first optical axis and the third optical axis are directed to a second side of the sensor pod opposite the first side.

5. The perception system of claim 3 or 4, wherein the first optical axis forms a shallower acute angle relative to an axis of the sensor pod than the second optical axis.

6. The perception system of any preceding claim, wherein the first and the third imaging devices are separated by a predetermined distance and the second and the fourth imaging devices are separated by the predetermined distance.

7. The perception system of claim 6, wherein the predetermined distance is between 450 millimeters and 550 millimeters.

8. The perception system of any preceding claim, wherein the sensor pod comprises a first sensor pod, the perception system further comprising second, third, and fourth sensor pods each having four imaging devices, and the controller develops three three-dimensional images from the imaging devices of each sensor pod.

9. The perception system of claim 8, wherein the first, second, third, and fourth sensor pods are disposed on a front, rear, left-side, and right-side of the work vehicle, respectively.

10. The perception system of claim 9, wherein adjacent fields of views of three-dimensional images developed from the imaging devices of the first, second, third, and fourth sensor pods have overlapping regions.

11. The perception system of claim 9 or 10, wherein the first, second, third, and fourth sensor pods are disposed on a roof of the work vehicle.

12. The perception system of any preceding claim, wherein the controller is configured to determine the object is associated with a human and in response causes termination of operation of the work vehicle.

13. A work vehicle, comprising:
first, second, third, and fourth imaging devices disposed spaced apart along a side of the work vehicle, wherein first, second, third, and fourth imaging devices have first, second, third, and fourth optical axes, the second and third imaging devices are disposed intermediate the first and fourth imaging devices, and the first, second, third, and fourth optical axes are directed away from the side of the work vehicle; and
a work vehicle perception system controller having a processing and memory architecture configured to execute instructions stored in the memory to:
receive first, second, third, and fourth two-dimensional images from the first, second, third, and fourth imaging devices, respectively;
develop a first three-dimensional image from the first and the third two-dimensional images, a second three-dimensional image from the second and the fourth two-dimensional images, and a third three-dimensional image from the second and the third two-dimensional images;
analyze the first, second, and third three-dimensional images to determine presence of an object between the side of the work vehicle and less than a predetermined distance from the work vehicle; and
generate an alert associated with the presence of the object.

14. The work vehicle of claim 13, wherein the first, second, third, and fourth imaging devices comprise a first sensor pod, the work vehicle further comprising second, third, and fourth sensor pods each having four imaging devices, wherein the controller develops three three-dimensional images from the imaging devices of each sensor pod, and the first, second, third, and fourth sensor pods are disposed on a roof of the work vehicle and on a front, rear, left-side, and right-side of the work vehicle, respectively.

15. The work vehicle of claim 13 or 14, wherein adjacent fields of views of three-dimensional images generated from the imaging devices of the first, second, third, and fourth sensor pods have overlapping regions and the work vehicle perception system controller is configured to determine the object is associated with a human and in response causes termination of operation of the work vehicle.
